# FASCICULE DE BREVET EUROPEEN

(11) **EP 1 700 218 B1**
(45) Date de publication et mention de la délivrance du brevet: **15.04.2009**
(21) Numéro de dépôt: 04817606.9
(22) Date de dépôt: 27.12.2004
(51) Int. Cl.: G06F 11/36

(54) **PROCEDE DE DETERMINATION DE CARACTERISTIQUES OPERATIONNELLES D'UN PROGRAMME**
VERFAHREN ZUM BESTIMMEN VON BETRIEBSEIGENSCHAFTEN EINES PROGRAMMS
METHOD FOR DETERMINING OPERATIONAL CHARACTERISTICS OF A PROGRAM

(30) Priorité: 30.12.2003 FR 0315544
(43) Date de publication de la demande: 13.09.2006
(73) Titulaire: Trusted Logic, 78000 Versailles (FR)
(72) Inventeur: VETILLARD, Eric, Résidence Garbejaire 2, Bât 1, F-06560 Valbonne (FR); MARLET, Renaud, F-33000 Bordeaux (FR)
(74) Mandataire: de Saint-Palais, Arnaud Marie
(86) Numéro de dépôt international: PCT/FR2004/003394
(87) Numéro de publication internationale: WO 2005/073860

(56) Documents cités:
- CHUGUNOV G; FREDLUND L -A; GUROV D: "Model checking of multi-applet JavaCard applications" PROCEEDINGS OF CARDIS'02. FIFTH SMART CARD RESEARCH AND ADVANCED APPLICATION CONFERENCE, novembre 2002 (2002-11), pages 87-95, XP002299498 SAN JOSE, CA, USA
- BARTHE G; GUROV D; HUISMAN M: "Compositional verification of secure applet interactions" FUNDAMENTAL APPROACHES TO SOFTWARE ENGINEERING. 5TH INTERNATIONAL CONFERENCE, FASE 2002, avril 2002 (2002-04), pages 15-32, XP002299499 GRENOBLE, FRANCE
- GIRARD P; LANET J.L.: "New Security Issues Raised by Open Cards" TECHNICAL REPORT SM-99-03, juin 1999 (1999-06), XP002299500 GEMPLUS RESEARCH LAB
- NACCACHE D; TCHOULKINE A; TYMEN C; TRICHINA E: "Reducing the memory complexity of type-inference algorithms" INFORMATION AND COMMUNICATIONS SECURITY. 4TH INTERNATIONAL CONFERENCE ICICS 2002, décembre 2002 (2002-12), pages 109-121, XP002299501

## Description

La présente invention a pour objet un procédé pour la détermination de caractéristiques opérationnelles d'un programme.

Elle s'applique notamment à la validation d'applications par rapport à des critères opérationnels spécifiques donnés et, en particulier, à l'automatisation du contrôle du programme en vue de son exécution sur des plates-formes cibles par des utilisateurs donnés.

L'invention concerne également un système mettant en oeuvre le procédé selon l'invention pour garantir que des applications proposées par un serveur respectent des critères de validité associés aux plates-formes d'exécution de ces applications.

La plupart des petits systèmes embarqués (terminaux de paiement, organiseurs électroniques, téléphones mobiles, cartes à puce, etc.), réalisés il y a quelques années, étaient des systèmes fermés ne pouvant exécuter que des programmes déterminés installés lors de la fabrication. De même, bien que fonctionnellement plus ouverts, la plupart des ordinateurs étaient déconnectés de tout réseau et les quelques programmes qu'ils exécutaient avaient pour origine des éditeurs de logiciels bien identifiés. Du fait de cette faible variabilité, il était alors possible de « contenir » les défauts de fonctionnement des plates-formes d'exécution et des programmes.
Aujourd'hui, la tendance est à l'ouverture des petits systèmes embarqués : même si la maîtrise n'en revient pas toujours directement à l'utilisateur final, on peut désormais charger de nouveaux programmes sur ces plates-formes d'exécution. Par ailleurs, beaucoup d'ordinateurs et de systèmes embarqués sont connectés, temporairement ou non, à des réseaux (Internet, téléphonie mobile, etc.) sur lesquels sont téléchargés des programmes aux origines souvent inconnues et aux fonctionnalités souvent indéterminées. Enfin, la segmentation des marchés et la multiplication des fournisseurs, des modèles matériels et des versions logicielles conduisent, malgré la définition de standards, à des combinaisons de configurations qui n'ont pas toujours été anticipées. Cette situation accentue les risques de dysfonctionnement, notamment en ce qui concerne la sécurité et l'interopérabilité.

Volontaires ou involontaires, les dysfonctionnements d'une application concernent en premier chef la sécurité. Une application peut par exemple effectuer des opérations illicites (divulguer un code secret, se connecter à des sites non autorisés, effectuer silencieusement des envois de messages, etc.), effectuer des opérations licites mais pour lesquelles elle n'a pas les droits appropriés, consommer plus de ressources que ce à quoi elle peut prétendre et ainsi en priver d'autres applications, altérer des données précieuses, etc.

Un autre souci majeur concerne l'interopérabilité. En effet, une application peut faire appel à des fonctionnalités matérielles ou logicielles qui s'avèrent ne pas être présentes sur la plate-forme d'exécution (par exemple parce qu'elles sont optionnelles ou limitées) ou qui sont présentes d'une manière inattendue (par exemple à cause d'une incompatibilité de version). Dans ce cas, l'application ne fonctionne pas ou fonctionne mal, ce que l'utilisateur final peut imputer à tort au fournisseur du service ou du matériel.

Les conséquences de ces dysfonctionnements peuvent être très graves dans le cas de systèmes critiques où la sécurité est primordiale. C'est le cas par exemple pour les applications dans le domaine de la banque, de la santé, du transport, de l'identité, etc. Même lorsque les dysfonctionnements sont mineurs pour les utilisateurs et ne se soldent que par de faibles dégâts ou des indisponibilités des systèmes, les retombées commerciales peuvent être désastreuses pour les fournisseurs de matériel ou de logiciels : non seulement cela peut nécessiter de coûteux rappels de matériel, mais surtout cela peut endommager leur image auprès des consommateurs. Le risque est notamment manifeste pour les opérateurs téléphoniques qui permettent à leurs utilisateurs de télécharger de nouveaux programmes dans leurs téléphones mobiles.

Outre les problèmes de sécurité et d'interopérabilité, certains fournisseurs veulent aussi appliquer une discipline de déontologie (par exemple, pour le contrôle d'accès des mineurs), des principes d'ergonomie ou des règles de style (par exemple, pour le respect d'un « Look and Feel »).

Le problème qui se pose est en fait plus généralement celui du contrôle de l'adéquation d'un programme à une certaine « politique » de sécurité, d'interopérabilité, etc.

Avant de répondre à la question du contrôle des programmes, une première étape consiste tout d'abord à établir des critères qui définissent s'il est acceptable ou non qu'un programme donné soit exécuté sur une plate-forme cible donnée (ou un ensemble de plates-formes) par certains groupes d'utilisateurs donnés. Des critères de sécurité peuvent notamment être issus d'une analyse de risque préalable, qui évalue notamment les biens à protéger sur la plate-forme et dans les programmes, les menaces à l'encontre de ces biens, et les mesures à prendre pour s'en prémunir. Des critères d'interopérabilité peuvent être tirés des cas d'erreur signalés par les équipes de test et les utilisateurs, ainsi que de l'expérience de bonne programmation des développeurs.

Par exemple, dans le cas d'application pour cartes à puce, un critère sécuritaire peut stipuler qu'il est interdit d'utiliser des clés « DES » trop faibles, par exemple d'une longueur inférieure à 128 bits. De même, un critère d'interopérabilité peut stipuler de ne pas utiliser de clé « RSA », ou de clés « RSA » de longueur supérieure à 1024 bits, parce que la plate-forme cible ne permet pas de manipuler ce type de clés, ou des clés d'une telle taille.

Pour pouvoir être vérifiés de manière non ambiguë, les critères doivent être clairement formulés. Un critère s'exprime souvent sous forme de contraintes concernant l'usage de routines ou classes de librairies. Dans le cas d'applications « Java Card » (langage qui est spécialisé pour l'exécution sur une carte à puce), l'exemple de critère sécuritaire ci-dessus s'exprime de manière plus explicite par : « La méthode « buildKey(keyType, keyLength, ...)» n'est pas appelée avec un argument « keyLength » inférieur à 128 si l'argument « keyType » est égal à la valeur de la constante « TYPE_DES » ». (« Java » et « Java Card » sont des marques déposées de Sun Microsystems. Pour des raisons de lisibilité, le préfixe de classe « javacard.framework.KeyBuilder » sera volontairement omis).

Ainsi le programme suivant satisfait-il le critère sécuritaire :

```
 "void install(byte[] buf, short ofs, short len) {
  ...
  switch(buf[ofs++]) {
     case 1: /l Use DES 128 bits
       myKey = buildKey(TYPE_DES, LENGTH_DES3_2KEY);
       break;
     case 2: // Use DES 192 bits
       myKey = buildKey(TYPE_DES, LENGTH_DES3_3KEY);
       break;
     case 3: // Use RSA 1024 bits
       myKey = buildKey(TYPE_RSA_PRIVATE, LENGTH_RSA_1024);
        break;
  }
  ...
 }
```

En effet, quels que soient les chemins d'exécution, la méthode « buildKey » est toujours appelée avec des arguments compatibles avec le critère : ou bien « keyType » vaut « TYPE_DES» et « keyLength » vaut «LENGTH_DES3_2KEY» (égal à 128) ou «LENGTH_DES3_3KEY» (égal à 196), ou bien « keyType » vaut «TYPE_RSA_PRIVATE» (différent de «TYPE_DES »).

En revanche, le programme suivant ne satisfait pas le critère.

```
   void install(byte[] buf, short ofs, short len) {
    ...
    myKey = buildKey(buf[ofs++], buf[ofs++]);
    ...
   }
```

En effet, la valeur « buf » est un argument dynamique : il est donc possible de construire des clés de type et de longueur arbitraire. En particulier, il est donc possible que « buf[ofs] » soit égal à « TYPE_DES» et que « buf[ofs+1] » soit inférieur à 128.

En ce qui concerne le contrôle effectif d'un programme, l'état de l'art peut se résumer comme suit :
Pour déterminer si un programme donné satisfait des critères donnés pour une plate-forme donnée, plusieurs approches sont aujourd'hui employées. Elles se distinguent selon plusieurs aspects : le contrôle est statique (avant l'exécution sur la plate-forme) ou dynamique (pendant l'exécution) ; le contrôle est « boîte noire » (sans regarder le code) ou « boîte blanche » (en regardant le code) ; le contrôle est « manuel » (sans l'aide d'outils d'analyse) ou automatique (avec l'aide d'un outil d'analyse). Les contrôles couramment employés sont les suivants :
   - Les critères, notamment sécuritaires, peuvent être mis en oeuvre par des contrôles dynamiques effectués au cours de l'exécution du programme. Cette approche a trois désavantages majeurs. Tout d'abord, elle découvre les problèmes trop tard, une fois le programme déjà chargé et en cours d'exécution. Ensuite, parce qu'elle n'a qu'une vision « boîte noire » de l'application, elle nécessite de borner arbitrairement l'exploitation des fonctionnalités et ressources de la plate-forme (par exemple, pas d'envoi de plus de trois messages). Enfin, elle ne résout pas les problèmes d' interopérabilité.
   - Le programme peut aussi être testé en boîte noire, sans regarder le code. Avec cette approche, le programme est exécuté dans un certain nombre de circonstances supposées représentatives, et son comportement est observé de l'extérieur pour juger s'il respecte les critères. Cette solution peut permettre de répondre à certaines questions liées à l'ergonomie, mais ne procure pas de garantie forte sur les questions de sécurité ou d'interopérabilité. En effet, on n'examine avec cette méthode qu'un petit nombre de chemins d'exécution possibles, alors qu'il en existe une infinité. Par exemple, des chevaux de Troie (programme ou données qui semblent inoffensives lorsqu'elles sont chargées sur la plate-forme mais qui facilitent ensuite une attaque, par exemple par un pirate ou un virus) ne peuvent être détectés à coup sûr.
   - Le programme peut être contrôlé manuellement, en regardant le code mais sans l'aide d'un outil d'analyse. Cette solution a de nombreux désavantages. Un tel contrôle est en effet long (donc coûteux) et fastidieux, ce qui interdit en pratique le traitement de gros volumes de programmes. De plus, il faut repayer le coût du contrôle à chaque nouvelle version du programme, de la plate-forme d'exécution ou des critères. Par ailleurs, cette approche suppose en pratique que le code source du programme est disponible, ce qui est peu souvent le cas pour des raisons de confidentialité ou de propriété industrielle. Lorsque seul le code objet est disponible, l'analyse manuelle devient extrêmement longue et difficile, et le risque d'une erreur humaine est multiplié d'autant.
   - Le programme peut aussi être contrôlé automatiquement, avec l'aide d'un outil d'analyse. Plusieurs types d'outil existent aujourd'hui :
      - Certains outils vérifient à l'aide d'une analyse statique que le code d'un programme respecte des règles générales de bonne formation et de bon typage, ce qui apporte certaines garanties de bon fonctionnement, quelle que soit la plate-forme cible. C'est par exemple le cas des vérificateurs de code octet (« bytecode verifiers ») associés aux environnements d'exécution « Java », y compris « Java Card ». De tels analyseurs de types peuvent fonctionner aussi bien sur le code source que sur le code objet. Ils ne répondent toutefois pas à des critères particuliers, concernant par exemple la sécurité ou l'interopérabilité.
      - D'autres outils, surtout destinés aux développeurs, vérifient à l'aide d'une analyse statique que le code d'un programme ne peut pas effectuer d'opérations qui n'ont pas de sens, comme de déréférencer un pointeur nul ou accéder à un élément de tableau hors des limites. Ces outils apportent ainsi certaines garanties de bon fonctionnement, quelle que soit la plate-forme cible. Mais comme pour les analyseurs de type, ils ne répondent pas à des critères particuliers.
      - Enfin, certains outils examinent le code du programme, source ou objet, pour rechercher des occurrences d'appels de routines. Ils permettent ainsi d'appliquer des critères spécifiques qui interdissent l'usage de certaines routines (que ce soit pour des raisons de sécurité ou d'interopérabilité) : ils rejettent tout programme qui comportent des appels à ces routines. Cependant, de tels outils ne peuvent pas non plus vérifier le genre de règle donné en exemple ci-dessus : il faut non seulement détecter que la méthode « buildKey » est appelée mais aussi savoir si son premier argument est égal à « TYPE_DES» et son deuxième argument inférieur à 128.

Le document Chugunov G; Fredlund L-A; Gurov D: "Model checking of multi-applet Java Card applications" Proceedings of CARDIS'02. Fifth smart card research and advanced application Conference, novembre 2002 (2002-11), pages 87-95, SAN JOSE, CA, USA, décrit un procédé pour la détermination de caractéristiques opérationnelles d'un programme fondé sur des analyses de programme et prenant en compte des occurrences ou des séquences d'occurrences d'événements pouvant se produire au cours des exécutions possibles du programme. Toutefois ce document n'évoque pas la possibilité de déterminer un degré de précision avec lequel les caractéristiques opérationnelles du programme doivent être déterminées.

Compte tenu des problèmes précédemment évoqués, l'invention a plus particulièrement pour but de permettre le développement d'outils de contrôle qui peuvent s'adapter aux besoins de règles spécifiques tout en permettant la vérification automatique de règles complexes, concernant notamment la valeur possible des arguments de certaines opérations et l'enchaînement de telles opérations.

A cet effet, elle propose un procédé pour la détermination de caractéristiques opérationnelles d'un programme mettant en oeuvre une procédure de vérification comportant les étapes suivantes :
- une première étape comportant :
   - l'expression des caractéristiques opérationnelles du programme comme des fonctions portant sur des occurrences ou des séquences d'occurrences d'événements pouvant se produire au cours des exécutions possibles du programme, lesdits événements pouvant porter sur des opérations particulières, sur des valeurs particulières, en des points de programme particuliers et dans des états particuliers du programme ;
   - la détermination éventuelle d'un degré de précision avec lequel ces caractéristiques doivent être déterminées ;
   - la détermination éventuelle d'un ensemble de contextes d'exécution particuliers dans lesquels le programme sera toujours exécuté ;
   - la détermination éventuelle de spécificités opératoires d'un ensemble de plates-formes sur lesquelles le programme sera exécuté ;
- une deuxième étape d'estimation, par des analyses de programme, et en tenant compte dudit degré de précision éventuel, dudit ensemble éventuel de contextes d'exécution particuliers et desdites spécificités opératoires éventuelles de plates-formes, d'informations concernant la structure du programme, les chemins d'exécution possibles du programme et les valeurs de données possibles, en divers points des chemins d'exécution et sous différentes conditions d'exécution, des états et données manipulées par le programme ;
- une troisième étape de détermination desdites caractéristiques opérationnelles, grâce aux informations extraites par lesdites analyses de programme, par le calcul desdites fonctions sur les occurrences ou séquences particulières d'occurrences d'opérations particulières, portant sur des valeurs particulières, en des points de programme particuliers, dans des états particuliers du programme, pour l'ensemble des chemins d'exécution déterminé par les analyses.

Ce procédé pourra prendre en compte :
- un ensemble de caractéristiques concernant les opérations que le programme peut effectuer au cours de son exécution.

Avantageusement, les informations extraites au cours de la deuxième étape du procédé pourront être représentées à l'aide d'une ou plusieurs des structures suivantes : graphe d'état du programme, graphe d'héritage, graphe d'appel des routines du programme, graphe de flot de contrôle de chaque routine du programme, structure de boucles et de rattrapage d'exceptions, structure de blocs de base (« basic blocks »), abstraction de l'état du programme en un point d'exécution, étant entendu que :
- ladite extraction d'informations ne porte pas sur des informations inutiles à la détermination des caractéristiques opérationnelles, tant du point de vue de la quantité d'informations extraites que de la précision de ces informations,
- les informations majeures parmi lesdites informations extraites sont calculées et stockées, tandis que les autres informations ne sont calculées que lorsque nécessaire pour la détermination desdites caractéristiques opérationnelles.

Par « information majeure », on entend les informations extraites aux noeuds d'une décomposition du code des routines en un graphe de blocs de base (« basic blocks »), les autres informations (dans le corps des blocs de base) étant recalculées par une analyse locale à partir des informations stockées en début et en fin de bloc correspondant.

Il apparaît clairement que ce procédé peut être mis en oeuvre pour réaliser un système d'exécution multi applications garantissant que les applications respectent des critères de validité donnés.

L'invention s'applique en outre au filtrage automatique d'un ensemble de programmes par rapport à un ensemble de critères de validité donnés. Dans ce cas, les susdites caractéristiques opérationnelles représentent des critères de validité. L'étape de détermination établit alors soit que le programme est valide parce qu'il respecte chacun desdits critères ou invalide parce qu'au moins l'un desdits critères ne peut pas être respecté.

Les trois étapes de la procédure de vérification mises en oeuvre par le procédé selon l'invention seront décrites plus en détail ci-après, à titre d'exemple non limitatif.

### Expression des critères :

Dans un premier temps, les critères sont traduits en termes d'événements définis comme la réalisation d'opérations particulières portant sur des valeurs particulières en des points de programme particuliers. A titre d'exemple, certaines desdites opérations particulières (qui, accompagnées de contraintes sur les valeurs manipulées, les points d'exécution, et les états du programme, forment des événements) sont définies comme l'une des actions suivantes : appel à une routine donnée, accès à une variable donnée, lecture ou écriture sur un port donné, calcul d'une expression arithmétique donnée, fin d'exécution du programme ou d'une routine (sur un retour normal ou une levée d'exception).

Un événement est par exemple l'appel à une routine avec un argument à l'intérieur d'un certain intervalle (cf. exemple ci-dessus concernant l'appel à la méthode « buildKey » avec un argument inférieur à 128), l'accès à un élément de tableau à un certain indice, le fait que les arguments d'une addition sont tels que l'addition peut déborder, l'atteignabilité d'un point de programme sous une condition symbolique portant sur les valeurs manipulées par le programme, le fait que le programme ou une routine termine dans un état particulier en levant une exception particulière, etc.

Un critère même s'exprime comme une fonction qui porte sur les occurrences ou séquences particulières d'occurrences de tels événements, au cours des diverses exécutions possibles du programme. On peut ainsi modéliser des critères relativement complexes.

Un cadre possible pour l'expression formelle de tels critères est la logique temporelle linéaire (LTL). Ce formalisme permet d'exprimer par exemple que des événements se produisent toujours, ou bien tôt ou tard, ou bien qu'une condition reste vraie jusqu'à ce qu'un événement se produise, etc.

Par exemple, « Java Card » fournit une aide spécifique pour réaliser une transaction (mise à jour atomique de l'état permanent du système). Pour cela, il faut appeler la méthode « beginTransaction() », effectuer des mises à jour, puis appeler la méthode « commitTransaction() ». On est alors garanti qu'en cas de remise à jour (notamment intempestive) de la carte, soit aucune modification n'aura effectuée, soit toutes les modifications n'auront été effectuées. Le critère de validité des transactions stipule notamment que la méthode « commitTransaction() » ne doit être appelée qu'après l'appel de « beginTransaction() ».

Les séquences d'événements peuvent aussi faire intervenir les valeurs manipulées par le programme. Par exemple, si un critère stipule qu'on ne peut pas libérer une ressource sans l'avoir auparavant allouée - sinon la libération échouerait -, on peut définir une règle explicite du type suivant : une routine donnée (par exemple de libération de ressource) ne peut être appelée avec un certain argument que si cet argument a été la valeur de retour d'une autre routine donnée (par exemple d'allocation de ressource) appelée précédemment. Un tel exemple dans l'implémentation « Java Card » de la spécification « Open Platform v2.0.1' » est donné par la méthode de fermeture de canal sécurisé (« closeSecureChannel »), qui doit être appelée avec comme argument la valeur de retour de la méthode d'ouverture de canal sécurisé (« openSecureChannel »). Le programme suivant est invalide en ce sens :

```
  void process(APDU apdu) {
      ...
      chanNum = openSecureChannel(apdu);
      ...
      closeSecureChannel(0);
      ...
   }
```

En effet, pour que ce programme soit valide, il faudrait que la fermeture du canal sécurisé s'effectue par « closeSecureChannel(chanNum) ». De fait, ce programme ne fonctionne que dans le cas où la méthode « openSecureChannel » retourne la valeur 0.

On peut aussi par exemple vouloir s'assurer que des traitements spécifiques doivent nécessairement être prévus pour un ensemble de circonstances particulières. Un critère associé peut par exemple s'exprimer par la règle suivante : pour toute valeur d'un argument donnée d'une routine donnée (par exemple d'enregistrement de l'application aux interruptions ou événements programmatiques désignés par cet argument), il existe du code d'une autre routine donnée (par exemple de traitement des interruptions ou événements programmatiques auxquels l'application est abonnée) qui est uniquement atteignable lorsque cette autre routine est appelée avec en argument ladite valeur.

La traduction des critères en terme de règles explicites ainsi formulées peut s'effectuer une fois pour toute, tant que les critères restent les mêmes. Sauf dans le cas particulier de critères dépendant d'une spécification ou d'une implémentation de programme donnée, la traduction est en effet indépendante des programmes.

### Extraction d'informations par analyses de programme :

Dans un deuxième temps, pour un programme donné, des analyses statiques extraient des informations concernant la structure du programme, les chemins d'exécution possibles du programme et les valeurs possibles, sous différentes conditions d'exécution, des données manipulées en divers points des chemins d'exécution.

Il existe un ensemble de techniques connues pour déterminer des informations sur les chemins d'exécution possible du programme. Ces techniques permettent de calculer notamment le graphe d'appel des routines du programme et, pour chaque routine, son graphe de flot de contrôle (dont les noeuds sont regroupés ou non dans des blocs de bases) et sa structure de boucles et de rattrapage d'exceptions. Ces diverses structures de données sont des expressions finies et régulières qui peuvent représenter en fait une infinité de chemins d'exécution et qui forment un surensemble (pour des raisons d'approximation expliquées ci-dessous) de l'ensemble de tous les chemins d'exécution possibles du programme.

Il existe également des techniques, notamment l'interprétation abstraite, qui permettent d'obtenir des valeurs approchées (par exemple, des ensembles de valeurs possibles) des données manipulées par le programme en divers points d'exécution du code. Ce type d'information est ordinairement calculé afin de détecter des opérations élémentaires qui risquent d'échouer, comme la déréférence d'un pointeur nul ou l'accès à un élément de tableau hors de ses limites. Mais l'interprétation abstraite est plus générale. Elle peut notamment manipuler des valeurs symboliques et ainsi déterminer les conditions abstraites associées aux divers chemins d'exécutions que le programme peut emprunter. Cela permet par exemple de savoir, comme dans l'exemple des traitements spécifiques ci-dessus, si un point de programme est uniquement atteignable sous une condition particulière, donnée ou calculée.

D'autres éléments d'architecture du programme, comme le graphe d'héritage (exprimant la hiérarchie de classes dans le cas des langages à objets), peuvent aussi être déterminés.

### Détermination du respect des critères :

Dans un troisième et dernier temps, les critères sont évalués sur les informations extraites par les analyses. Autrement dit, les fonctions associées aux critères sont évaluées en considérant, pour l'ensemble des chemins d'exécution possibles calculés, les occurrences ou séquences particulières d'événements constitués par la réalisation d'opérations particulières en des points de programme particuliers et portant sur des valeurs particulières. La nature effective des calculs dépend de la formulation des critères et des types d'informations extraites par les analyses.

De nombreux perfectionnements de l'invention peuvent être construits sur la base de la procédure décrite ci-dessus. Des exemples de tels perfectionnements, qui sont combinables les uns avec les autres, seront décrits individuellement ci-après.

### Paramétrisation de la précision :

On observera tout d'abord que, dans le cas général, les chemins d'exécution et les valeurs manipulées par le programme correspondent à des propriétés mathématiques dites indécidables : on ne peut pas les déterminer avec exactitude mais on peut toutefois les approcher. En pratique, cela signifie qu'on ne peut connaître les chemins et les valeurs manipulées qu'avec une précision limitée.

Or il est souvent primordial que ces informations soient déterminées avec une grande précision. Dans le cas contraire, on peut signaler qu'un critère (par exemple qui impose qu'une quantité soit positive) risque de ne pas être respecté (par exemple parce qu'on a pu seulement déterminer que cette quantité pouvait être comprise entre -10 et 30) alors qu'une meilleure précision d'analyse (par exemple qui déterminerait que cette quantité ne peut en fait qu'être comprise entre 5 et 20) aurait permis de conclure que le critère est toujours respecté.

En l'absence d'une précision suffisante, il faut soit rejeter l'application « par sécurité » (au risque de rejeter une application inoffensive), soit contrôler manuellement les critères sur lesquels l'analyse automatique n'a pu conclure. En cas d'analyse manuelle, on peut bénéficier des informations extraites par l'analyse qui, bien que pas suffisamment précises, permettent souvent néanmoins de circonscrire le périmètre de la vérification.

Dans tous les cas, il est avantageux de permettre une paramétrisation de la précision avec laquelle on effectue lesdites analyses. Ce paramétrage peut concerner les domaines de valeurs abstraites. Par exemple, les valeurs entières peuvent être abstraites par des valeurs exactes (ou la valeur indéterminée) ou par des intervalles. De même, les références peuvent être abstraites par leur type ; les tableaux, par une indication de leur longueur ; les chaînes de caractères, par une indication du préfixe connu (éventuellement vide) de la chaîne, etc. Le paramétrage peut aussi concerner les points de fusion de valeurs au cours de l'interprétation abstraite : analyse sensible au point de programme ou non, analyse mono-procédurale ou inter-procédurale, analyse sensible au contexte ou non, etc.

### Exécution du programme dans des contextes particuliers :

Par ailleurs, quelle que soit la précision de l'analyse, les valeurs approchées des données manipulées sont des propriétés du programme qui sont vraies pour toutes les exécutions possibles du programme, c'est-à-dire quels que soient ses arguments d'entrée. Or il est des cas où l'on sait que le programme ne sera utilisé que d'une certaine manière, dans certains contextes, c'est-à-dire avec des contraintes connues concernant ses arguments.

En cette circonstance, on peut améliorer la précision de l'analyse en prenant en compte des hypothèses sur les valeurs de ces arguments. Dans le cas d'une analyse pas interprétation abstraite, au lieu de supposer tous les arguments indéterminés, on peut notamment donner des valeurs abstraites particulières aux paramètres (y compris de configuration) et arguments du programme avant de lancer l'analyse.

### Calculs réduits aux informations nécessaires :

Outre la précision des informations calculées, la quantité de ces informations est aussi un paramètre sur lequel on peut jouer. En particulier, il n'est pas nécessaire qu'une analyse de programme détermine toutes les valeurs manipulées en tous les points de programme. En effet, seules les informations qui interviennent dans les formules qui représentent les critères n'ont à être calculées et mémorisées lors des analyses.

Pour réduire encore davantage la quantité d'informations stockées, on peut aussi ne mémoriser des informations qu'en certains points critiques et recalculer les informations manquantes selon les besoins de l'évaluation des critères. Par exemple, on peut ne mémoriser les informations qu'aux noeuds d'une décomposition du code des routines en un graphe de blocs de bases (« basic blocks ») ; lorsqu'une information est nécessaire en un point de programme quelconque d'un bloc de base, elle peut aisément être recalculée par une simple analyse locale à partir des informations stockées en début et fin de bloc.

Ces optimisations réduisent les ressources (espace mémoire, temps de calcul) nécessaires pour la mise en oeuvre de la procédure de vérification. À ressources constantes, ces optimisations permettent aussi une meilleure précision, et donc une réduction ou disparition des éventuelles vérifications manuelles additionnelles.

### Calculs d'informations et évaluation des critères simultanés :

Dans le même esprit de réduction des ressources consommées, certains critères peuvent aussi être évalués au vol, au cours des analyses de programmes. En combinant, au moins pour certains critères, les deuxième et troisième étapes de la procédure de vérification, on évite un stockage massif d'informations, même temporaire : l'information est consommée dès qu'elle est produite, et ensuite peut être oubliée.

### Vérification de programmes interactifs :

Par ailleurs, la procédure décrite ci-dessus peut être appliquée à un programme interactif, c'est-à-dire à un programme qui dépend d'un nombre indéterminé de valeurs dynamiques externes résultant de cette interaction. Un tel programme peut en effet être vu comme un programme qui lit progressivement des suites de données, éventuellement infinies (les contextes d'exécution sont donnés ici par une description abstraite des suites de données possibles représentant lesdites valeurs dynamiques). Ces suites de données peuvent être modélisées par des valeurs abstraites finies au même titre que les autres arguments du programme, pour les besoins des analyses statiques.

### Vérification de programmes dans des cadres d'exécution :

De plus, dans certains cas, une partie de la logique du programme peut être gérée par un cadre d'exécution (« framework »), implémenté sur les plates-formes. Par exemple, les applications « Java Card » s'inscrivent dans un tel cadre. Une application « Java Card » doit notamment hériter de la classe « javacard.framework.Applet » et définir deux méthodes: « install() » et « process() ». L'exécution du programme consiste en l'appel par la plate-forme de la méthode « install() » avec en argument un tableau d'octets, puis (en omettant pour simplifier la question de la sélection) en un nombre indéterminé d'appels de la méthode « process() » avec, à chaque appel, un nouveau tableau d'octets en argument. (On peut remarquer que les applications « Java Card » sont ainsi également des programmes interactifs au sens indiqué ci-dessus).

Pour appliquer la procédure décrite ci-dessus à de tels programmes, il faut aussi prendre en compte le cadre d'exécution. Dans l'exemple de « Java Card », cela peut conduire à rendre explicite pour les analyses la boucle qui est implicite dans le cadre d'exécution, qui effectue les appels de la méthode « process() ».

Les analyses statistiques pourront prendre en compte la sémantique de ce cadre d'exécution (y compris les éventuelles boucles d'interaction implicites du programme).

### Graphe d'états :

Pour augmenter la précision des analyses, il est aussi parfois nécessaire de « dérouler » les boucles et appels récursifs du programme en fonction d'informations concernant les valeurs manipulées par le programme à l'exécution. On obtient ainsi non pas des informations globales qui sont vraies quel que soit le nombre d'itérations d'une boucle ou d'appels récursifs, mais des informations locales, pour chaque tour de boucle ou appel récursif. Ce cas figure se produit notamment dans le cas de programmes interactifs qui s'insèrent dans des cadres d'exécution. Par exemple, dans le cas d'une application « Java Card », les appels successifs à la méthode « process() » peuvent conduire à des résultats d'analyse différents en fonctions des états du programme calculés lors des appels précédents.

L'analyse de l'application, après déroulage de la boucle d'interaction implicite ainsi que abstraction et identification des états du programme, fournit alors comme résultat un graphe d'états sur lequel peuvent être calculés les critères. Les noeuds de ce graphe d'états représentent les états de l'application ; les transitions de ce graphe sont étiquetées par les différents classes d'arguments fournis à la méthode « process() ».

### Spécificités opératoires des plates-formes d'exécution :

Par ailleurs, comme indiqué en introduction, le bon fonctionnement d'un programme dépend de la plate-forme d'exécution, qui peut implémenter ou non, convenablement ou non, certaines fonctionnalités.

Afin de prévoir correctement ou plus finement le comportement d'un programme sur une plate-forme ou un ensemble de plates-formes donné, les spécificités opératoires de ces plates-formes (par exemple le comportement des librairies) peuvent être fournies et exploitées au moment des analyses de programme. Bien sûr, l'évaluation des critères en fonction d'informations extraites de telles analyses est alors spécifique aux plates-formes cibles correspondantes.

Dans le cas d'une analyse par interprétation abstraite, les spécificités opératoires peuvent être données par des fonctions abstraites qui définissent la sémantique des opérations particulières de ces plates-formes.

### Généralisation aux caractéristiques opérationnelles des programmes :

Il est important aussi de noter que la procédure décrite ci-dessus ne se limite pas à des critères booléens et couvre de fait un spectre plus large que celui de la validation d'applications. Plus généralement, cette procédure permet en effet de déterminer des caractéristiques opérationnelles d'un programme.

Par exemple, le procédé selon l'invention permet, grâce à ses trois étapes, de déterminer les ressources consommées par le programme lors de son exécution, comme par exemple la quantité totale de mémoire allouée. La réunion des informations d'accès aux ressources, collectées le long des divers chemins d'exécution possibles, fournit en effet un encadrement des ressources consommées.

Cette procédure permet aussi notamment de déterminer les fonctionnalités de la plate-forme d'exécution qui sont exploitées par le programme lors de son exécution. On peut réunir pour cela les fonctionnalités utilisées qui sont recensées le long de chacun des chemins d'exécution possibles.

### Validation de nouveaux critères :

On peut également observer que la procédure décrite ci-dessus analyse un unique programme donné par rapport à des critères donnés, critères éventuellement spécifiques à une unique plate-forme ou classe de plates-formes d'exécution donnée.

Toutefois, il n'est pas forcément nécessaire de ré-analyser un programme quand se pose la question de son adéquation à de nouveaux critères ou à une nouvelle plate-forme d'exécution. Il suffit en effet de ré-exploiter les informations précédemment extraites, et par exemple stockées dans une base de données.

### Validation et filtrage d'un ensemble de programmes :

En réunissant les caractéristiques extraites d'un ensemble de programme, on obtient aussi une procédure de validation d'un groupe de programmes destinés à résider ensemble sur une plate-forme donnée. Autrement dit, on peut composer des groupes de programmes qui forment un tout cohérent par rapport à des critères donnés.

Cette fonctionnalité peut être utilisée comme filtre sur un serveur d'applications. Connaissant les caractéristiques de la plate-forme d'exécution d'un utilisateur de ce service, les applications incompatibles avec cette plate-forme sont masquées. L'utilisateur n'a ainsi accès qu'aux applications qui sont compatibles avec sa plate-forme d'exécution. Il est ainsi garanti du bon fonctionnement de toute application qu'il voudrait charger. Il faut noter qu'il n'est pas nécessaire de refaire les analyses de programme pour proposer une liste d'applications valides à un utilisateur : les résultats d'analyse sont réutilisés ; seuls les calculs correspondant au test de compatibilité par rapport à la plate-forme d'exécution sont à refaire, s'ils n'ont pas eux aussi déjà été calculés.

De préférence, l'extraction d'informations par analyse statique de programme n'est effectuée qu'une fois par programme et réutilisée à chaque fois que nécessaire pour déterminer si le programme respecte un ensemble de critères de validité donné.

### Abstraction des informations extraites :

En pratique, les résultats d'une analyse statique de programme peuvent être assez volumineux et donc difficile à stocker. Quand c'est le cas, il peut être avantageux d'abstraire ces résultats pour ne conserver que des informations simplifiées.

On peut notamment se limiter à un profil d'exécution, défini par exemple comme l'ensemble des fonctionnalités exploitées par le programme et la quantité maximale de ressources consommées au cours d'une exécution quelconque. Un tel profil, qui ne fait en particulier pas apparaître la notion de chemins d'exécution, requiert un espace mémoire de stockage beaucoup plus faible. Il est aisément comparé à un ensemble de fonctionnalités connues comme disponibles sur la plate-forme pour les questions d'interopérabilité, un ensemble de fonctionnalités déclarées utilisables selon des critères de sécurité, et une borne concernant la consommation des ressources.

Cet usage du procédé permet d'élaborer le « diagnostic » d'une application, pour une classe de critères et de plates-formes d'exécution particulières.

### Validation embarquée :

La détermination de caractéristiques opérationnelles peut s'effectuer, tout ou partie, sur la même plate-forme qui exécute le programme. Ce cas de figure est particulièrement intéressant dans le cas où les caractéristiques opérationnelles sont des règles de validité qui expriment le respect par un programme de critères particuliers et où la plate-forme d'exécution est un système embarqué, comme par exemple un téléphone mobile ou une carte à puce.

Deux cas particuliers sont à noter. Dans le premier cas, à la fois l'extraction des informations et l'évaluation des règles de validité sont effectuées sur la plate-forme d'exécution du programme. Dans le second cas, l'extraction des informations par analyses de programme est effectuée en dehors de la plate-forme ; elle est ensuite transmise à la plate-forme, par exemple au moment du chargement du programme ; enfin, l'évaluation des règles de validité à l'aide des informations transmises est effectuée sur cette même plate-forme.

Comme précédemment mentionné, l'invention concerne également un système mettant en oeuvre le procédé précédemment décrit pour garantir que des applications proposées par un serveur à des clients respectent des critères de validité associés aux plates-formes d'exécution de ces applications.

Ce système pourra avantageusement comprendre des moyens de filtrage conçus de manière à ce que, pour tout client désirant accéder aux applications pour une certaine plate-forme d'exécution, les applications soient filtrées conformément à la procédure de vérification précédemment décrite et que seules les applications qui respectent les critères de validité pour ladite plate-forme soient présentées au client.

De même, l'invention concerne un système d'exécution multi applications garantissant que les applications respectent des critères de validité donnés, ce système faisant intervenir un serveur d'analyses d'applications, un serveur de validation d'applications et une plate-forme d'exécution multi applications.

Ce système fait en outre intervenir des moyens permettant d'assurer, avant le chargement ou l'exécution d'une application sur la plate-forme :
- le respect par cette application desdits critères conformément au procédé précédemment décrit, l'extraction d'information s'effectuant sur le serveur d'analyses d'application tandis que l'évaluation desdits critères s'effectue sur le serveur de validation d'applications, et
- dans le cas où un des critères ne peut pas être respecté, l'échec du chargement ou de l'exécution de l'application, la modification de l'état du système et l'émission d'un signal sonore ou visuel pour avertir de l'échec du chargement ou de l'exécution.

Dans ce système, le serveur de validation d'applications pourra s'exécuter sur la plate-forme d'exécution multi applications, le serveur d'analyses d'applications s'exécutant hors de la plate-forme. Eventuellement, le serveur d'analyses d'applications et le serveur de validation d'applications pourront s'exécuter sur la plate-forme d'exécution multi applications.

## Revendications

1. Procédé pour la détermination des caractéristiques opérationnelles d'un programme,
**caractérisé en ce qu'**il comprend une procédure de vérification comportant les étapes suivantes :
- une première étape comportant :
■ l'expression des caractéristiques opérationnelles du programme comme des fonctions portant sur des occurrences ou des séquences d'occurrences d'événements pouvant se produire au cours des exécutions possibles du programme, lesdits événements pouvant porter sur des opérations particulières, sur des valeurs particulières, en des points de programme particuliers et dans des états particuliers du programme ;
■ la détermination éventuelle d'un degré de précision avec lequel ces caractéristiques doivent être déterminées ;
■ la détermination éventuelle d'un ensemble de contextes d'exécution particuliers dans lesquels le programme sera toujours exécuté ;
■ la détermination éventuelle de spécificités opératoires d'un ensemble de plates-formes sur lesquelles le programme sera exécuté ;
- une deuxième étape d'estimation, par des analyses statiques de programme, et en tenant compte dudit degré de précision éventuel, dudit ensemble éventuel de contextes d'exécution particuliers et desdites spécificités opératoires éventuelles de plates-formes d'exécution, d'informations concernant la structure du programme, les chemins d'exécution possibles du programme et les valeurs de données possibles, en divers points des chemins d'exécution et sous différentes conditions d'exécution, des états et données manipulées par le programme ;
- une troisième étape de détermination desdites caractéristiques opérationnelles, grâce aux informations extraites par lesdites analyses statiques de programme, par le calcul desdites fonctions sur les occurrences ou séquences particulières d'occurrences d'opérations particulières, portant sur des valeurs particulières, en des points de programme particuliers, dans des états particuliers du programme, pour l'ensemble des chemins d'exécution déterminé par les analyses statiques.

2. Procédé selon la revendication 1,
**caractérisé en ce que**, dans le cas où le programme est interactif et peut dépendre d'un nombre indéterminé de valeurs dynamiques résultant de cette interaction, les contextes d'exécution sont donnés par une description abstraite des suites de données possibles représentant lesdites valeurs dynamiques.

3. Procédé selon la revendication 1,
**caractérisé en ce que**, dans le cas où le programme s'insère dans un cadre d'exécution (« framework »), les analyses statiques prennent aussi en compte la sémantique de ce cadre d'exécution, y compris les éventuelles boucles d'interaction implicites du programme.

4. Procédé selon la revendication 1,
**caractérisé en ce que** certaines desdites opérations particulières (qui, accompagnées de contraintes sur les valeurs manipulées, les points d'exécution, et les états du programme, forment des événements) sont définies comme l'une des actions suivantes : appel à une routine donnée, accès à une variable donnée, lecture ou écriture sur un port donné, calcul d'une expression arithmétique donnée, fin d'exécution du programme ou d'une routine (sur un retour normal ou une levée d'exception).

5. Procédé selon la revendication 1,
**caractérisé en ce que** certaines desdites analyses statiques sont constituées par des interprétations abstraites du programme, sur des domaines abstraits qui peuvent représenter notamment des ensembles de valeurs possibles et des expressions symboliques.

6. Procédé selon la revendication 1,
**caractérisé en ce que** lesdites informations extraites sont représentées à l'aide d'une ou plusieurs des structures suivantes : graphe d'état du programme, graphe d'héritage, graphe d'appel des routines du programme, graphe de flot de contrôle de chaque routine du programme, structure de boucles et de rattrapage d'exceptions, structure de blocs de base (« basic blocks »), abstraction de l'état du programme en un point d'exécution.

7. Procédé selon la revendication 1,
**caractérisé en ce que** seules les informations majeures parmi lesdites informations extraites sont calculées et stockées et **en ce que** les autres informations ne sont calculées que lorsque nécessaire pour la détermination desdites caractéristiques opérationnelles.

8. Procédé selon la revendication 7,
**caractérisé en ce que** les informations majeures sont les informations extraites aux noeuds d'une décomposition du code des routines en un graphe de blocs de bases (« basic blocks ») et **en ce que** les autres informations (dans le corps des blocs de base) sont recalculées par une analyse locale à partir des informations stockées en début et fin du bloc correspondant.

9. Procédé selon la revendication 1,
**caractérisé en ce que** lesdites caractéristiques opérationnelles représentent des critères de validité et **en ce que** ladite détermination établit que le programme est valide (parce qu'il respecte chacun desdits critères) ou invalide (parce qu'au moins un desdits critères peut ne pas être respecté).

10. Procédé selon la revendication 9,
**caractérisé en ce que** lesdits critères de validité expriment des règles de sécurité ou d'interopérabilité.

11. Procédé selon la revendication 1,
**caractérisé en ce que** lesdites caractéristiques opérationnelles caractérisent les ressources qui sont consommées et les fonctionnalités qui sont exploitées par le programme lors de son exécution et **en ce que** ladite détermination fournit un profil d'exécution du programme.

12. Procédé selon la revendication 1,
**caractérisé en ce que** le calcul de certaines desdites fonctions associées aux caractéristiques opérationnelles est effectué au cours desdites analyses statiques de programme, dès que certaines desdites informations sont extraites.

13. Application du procédé selon la revendication 9 au filtrage automatique d'un ensemble de programmes par rapport à un ensemble de critères de validité donné,
**caractérisé en ce que** l'extraction d'informations par analyse statique de programme n'est effectuée qu'une fois par programme et réutilisée à chaque fois que nécessaire pour déterminer si le programme respecte ledit ensemble de critères de validité.

14. Système de distribution d'applications garantissant que les applications respectent des critères de validité associés aux plates-formes d'exécution de ces applications,
**caractérisé en ce qu'**il comprend des moyens de filtrage conçus de manière à ce que, pour tout client désirant accéder aux applications pour une certaine plate-forme d'exécution, les applications soient filtrées par une procédure de vérification conformément au procédé selon l'une des revendications 1 à 11, seules les applications qui respectent les critères de validité pour ladite plate-forme étant présentées au client.

15. Système d'exécution multi applications garantissant que les applications respectent des critères de validité donnés,
**caractérisé en ce qu'**il comprend :
- un serveur d'analyses d'applications, un serveur de validation d'applications et une plate-forme d'exécution multi applications, et
- des moyens permettant d'assurer avant le chargement ou l'exécution d'une application sur la plate-forme :
o le respect par cette application desdits critères conformément au procédé selon l'une des revendications 1 à 11, l'extraction d'informations s'effectuant sur le serveur d'analyses d'applications et l'évaluation desdits critères s'effectuant sur le serveur de validation d'applications, et
o dans le cas où un des critères peut ne pas être respecté, l'échec du chargement ou de l'exécution de l'application, la modification de l'état du système et l'émission d'un signal sonore ou visuel pour avertir de l'échec du chargement ou de l'exécution.

16. Système selon la revendication 15,
**caractérisé en ce que** le serveur de validation d'applications s'exécute sur la plate-forme d'exécution multi applications, le serveur d'analyses d'applications s'exécutant hors de la plate-forme.

17. Système selon la revendication 15,
**caractérisé en ce que** le serveur d'analyses d'applications et le serveur de validation d'applications s'exécutent sur la plate-forme d'exécution multi applications.

## Claims

1. A method for determining operational characteristics of a program, **characterised in that** it comprises a verification procedure comprising the following steps:
- a first step comprising:
■ expressing operational characteristics of the program as functions dealing with occurrences or sequences of occurrences of events which may occur during possible executions of the program, said events being able to deal with particular operations, particular values, at particular program points and in particular states of the program;
■ the possible determining of a level of precision with which these characteristics must be determined;
■ the possible determining of a set of particular contexts of execution in which the program will always be executed;
■ the possible determining of operational specificities of a set of platforms on which the program will be executed;
- a second step of estimation, by static program analysis, and in consideration of said possible level of precision, of said possible set of particular contexts of execution and of said possible operational specificities of execution platforms, of information relating to the structure of the program, the possible execution paths of the program and to the values of possible data, at various points of the execution paths and under different execution conditions, of the states and data handled by the program;
- a third step for determining said operational characteristics, by means of the information extracted by said static program analysis, by the computation of said functions on the occurrences or particular sequences of occurrences of particular operations, dealing with particular values, at particular points of the program, in particular states of the program, for the set of execution paths determined by the static analysis.

2. The method according to claim 1, **characterised in that**, in the case where the program is interactive and may depend on an undetermined number of dynamic values resulting from this interaction, the execution contexts are given by an abstract description of the possible series of data representing said dynamic values.

3. The method according to claim 1, **characterised in that**, in the case where the program is inserted into a framework of execution, the static analysis also take into account the semantics of this execution framework, including the possible implicit interaction loops of the program.

4. The method according to claim 1, **characterised in that** some of said particular operations (which form events, when accompanied by constraints on the values handled, the execution points, and the statuses of the program,) are defined as one of the following actions: call to a given routine, access to a given variable, reading or writing on a given port, computation of a given arithmetic expression, completion of execution of the program or of a routine (on a normal return or ending an exception).

5. The method according to claim 1, **characterised in that** some of said static analysis consist of abstract interpretations of the program, on abstract domains which may notably represent possible sets of values and symbolic expressions.

6. The method as claimed in claim 1, **characterised in that** said extracted information are represented by means of one or more of the following structures: status graph of the program, inheritance graph, graph of the routine calls of the program, control flow chart of each routine of the program, structure of loops and catch-up of exceptions, structure of basic blocks, abstraction of the status of the program at an execution point.

7. The method according to claim 1, **characterised in that** only the major pieces of information among said extracted information are computed and saved and **in that** the other pieces of information are only computed when necessary for determining said operational characteristics.

8. The method according to claim 7, **characterised in that** the major pieces of information are information extracted at the breakdown nodes of the code of the routines in a graph of basic blocks and **in that** the other pieces of information (in the body of the basic blocks) are recomputed by local analysis from information saved at the start and end of the corresponding block.

9. The method according to claim 1, **characterised in that** said operational characteristics represent validity criteria and **in that** said determination establishes that the program is valid (because it observes each of said criteria), or invalid (because at least one of said criteria cannot be observed).

10. The method according to claim 9, **characterised in that** said validity criteria express security or interoperability rules,

11. The method according to claim 1, **characterised in that** said operational characteristics characterise the resources which are consumed and the functionalities which are exploited by the program during its execution and **in that** said determination provides an execution profile of the program.

12. The method according to claim 1, **characterised in that** the computation of some of said functions associated with the operational characteristics is performed during said static program analysis, as soon as certain of said pieces of information are extracted.

13. Application of the method according to claim 9 for automatic filtering of a set of programs relative to a given set of validity criteria, **characterised in that** the extraction of information by static program analysis is only completed once per program and reused whenever necessary for determining whether the program observes said set of validity criteria.

14. A system for distribution of applications ensuring that the applications observe validity criteria associated with the execution platforms of these applications, **characterised in that** it comprises filtering means designed such that, for any client desiring to accede to the applications for a given execution platform, the applications are filtered by a verification procedure in accordance with the method according to any one of claims 1 to 11, only the applications which observe the validity criteria for said platform being presented to the client.

15. A system for multi-application execution ensuring that the applications observe given validity criteria, **characterised in that** it comprises:
- an application analysis server, a server for validation of applications and a multi-application platform, and
- means for ensuring, prior to loading or execution of an application on the platforms
• observance by this application of said criteria according to the method according to any one of claims 1 to 11, the extraction of information being carried out on the application analysis server and the evaluation of said criteria being carried out on the server for validation of applications, and
• in the case when one of the criteria cannot be observed, the failure of the loading or execution of the application, the change of the status of the system and emission of a sound or visual signal to alert of failure of loading or execution.

16. The system according to claim 15, **characterised in that** the server for validation of applications is executed on the multi-application platform, the application analysis server executing outside the platform.

17. The system according to claim 15, **characterised in that** the application analysis server and the server for validation of applications are executed on the multi-application platform.

## Patentansprüche

1. Verfahren zur Bestimmung der Betriebseigenschaften eines Programms,
**dadurch gekennzeichnet, dass** es einen Vorgang zur Verifizierung einschließt, der die folgenden Schritte einschließt:
- einen ersten Schritt, der folgendes einschließt:
■ das Ausdrücken der Betriebseigenschaften des Programms als Funktionen, die sich auf Eintritte oder auf Abfolgen von Eintritten von Ereignissen richten, die im Verlauf der möglichen Ausführungen des Programms ablaufen, wobei sich die Ereignisse auf bestimmte Vorgänge, auf bestimmte Werte an bestimmten Programmpunkten und in bestimmten Zuständen des Programms richten können;
■ die mögliche Bestimmung eines Genauigkeitsgrades, mit dem diese Merkmale bestimmt werden müssen;
■ die mögliche Bestimmung einer Gesamtheit von bestimmten Ausführungszusammenhängen, in denen das Programm immer ausgeführt wird;
■ die mögliche Bestimmung von betrieblichen Eigenarten einer Gesamtheit von Plattformen, auf denen das Programm ausgeführt wird;
- einen zweiten Schritt zum Abschätzen, durch statistische Programmanalysen und unter Berücksichtigung des möglichen Genaulgkeitsgrades der möglichen Gesamtheit von bestimmten Ausführungszusammenhängen und der möglichen betrieblichen Eigenarten von ausführenden Plattformen, von Informationen, die die Struktur des Programms, die möglichen Ausführungswege des Programms und die möglichen Werte von Daten betreffen, an verschiedenen Punkten der Ausführungswege und unter verschiedenen Ausführungsbedingungen, der durch das Programm manipulierten Zustände und Daten;
- eine dritten Schritt zum Bestimmen der Betriebseigenschaften mit Hilfe von Informationen, die durch die statistischen Programmanalysen, durch die Berechnung der Funktionen hinsichtlich der Eintritte oder der bestimmten Abfolgen von Eintritten von bestimmten Operationen, die auf bestimmte Werte ausgerichtet sind, an bestimmten Programmpunkten, in bestimmten Zuständen des Programms, für die durch die statistischen Analysen bestimmte Gesamtheit der Ausführungsweg extrahiert wurden.

2. Verfahren nach Anspruch 1,
**dadurch gekennzeichnet, dass** in dem Fall, wobei das Programm interaktiv ist und von einer unbestimmten Anzahl von aus dieser Interaktion resultierenden dynamischen Werten abhängen kann, die Ausführungszusammenhänge durch eine abstrakte Beschreibung der möglichen Reihenfolgen von Daten, die die dynamischen Werte darstellen, gegeben sind.

3. Verfahren nach Anspruch 1,
**dadurch gekennzeichnet, dass** in dem Fall, wobei das Programm in ein Ausführungsraster (framework) inseriert wird, die statistischen Analysen auch die Semantik dieses Ausführungsrasters, einschließlich der impliziten Dialogschleifen des Programms, berücksichtigen,

4. Verfahren nach Anspruch 1,
**dadurch gekennzeichnet, dass** bestimmte der speziellen Operationen (die, in Verbindung mit den Beschränkungen für die manipulierten Werte, die Ausführungspunkte und die Zustände des Programms, Ereignisse bilden) als eine der folgenden Aktionen definiert sind: Aufruf einer gegebenen Routine, Zugriff auf eine gegebene Variable, Auslesen oder Herausschreiben aus einem gegebenen Port, Berechnen eines gegebenen arithmetischen Ausdrucks, Ausführungsende des Programms oder einer Routine (auf eine Rückkehr zu normal oder auf ein Exception-Level).

5. Verfahren nach Anspruch 1,
**dadurch gekennzeichnet, dass** bestimmte der statistischen Analysen aus abstrakten Interpretationen des Programms, auf abstrakten Domänen, die insbesondere Gesamtheiten von möglichen Werten und symbolischen Ausdrücken darstellen können, bestehen.

6. Verfahren nach Anspruch 1,
**dadurch gekennzeichnet, dass** die extrahierten Informationen mit Hilfe von einer oder mehreren der folgenden Strukturen dargestellt werden: Graph von Zustand des Programms, Vererbungsgraph, Graph von Aufruf der Routinen des Programms, Flussdiagramm von Kontrolle jeder Routine des Programms, Struktur von Schleifen und Nachholen von Exceptions, Struktur von Basisblöcken ("basic blocs"), Abstraktion des Zustandes des Programms an einem Ausführungspunkt.

7. Verfahren nach Anspruch 1,
**dadurch gekennzeichnet, dass** nur die Hauptinformationen unter den extrahierten Informationen berechnet und gespeichert werden und **dadurch**, dass die anderen Informationen erst berechnet werden, wenn es zur Bestimmung der Betriebseigenschaften notwendig ist.

8. Verfahren nach Anspruch 7,
**dadurch gekennzeichnet, dass** die Hauptinformationen Informationen sind, die an den Knoten einer Dekomposition des Codes der Routinen aus einem Graph von Basisblöcken ("basic blocs") extrahiert werden und **dadurch** dass die anderen Informationen (in dem Körper der Basisblöcke) durch eine lokale Analyse ausgehend von gespeicherten Informationen zu Beginn und zum Ende des entsprechenden Blocks neu berechnet werden.

9. Verfahren nach Anspruch 1,
**dadurch gekennzeichnet, dass** die Betriebseigenschaften Gültigkeitskriterien darstellen und **dadurch** dass die Bestimmung ermittelt, dass das Programm gültig ist (weil es jedes der Kriterien beachtet) oder ungültig ist (weil mindestens eines der Kriterien nicht beachtet werden kann).

10. Verfahren nach Anspruch 9,
**dadurch gekennzeichnet, dass** die Gültigkeitskriterien Sicherheits- oder Interoperabilitätskriterien ausdrücken.

11. Verfahren nach Anspruch 1,
**dadurch gekennzeichnet, dass** die Betriebseigenschaften die Ressourcen, die verbraucht werden, und die Funktionalitäten, die von dem Programm während seiner Ausführung ausgenutzt werden, kennzeichnen und **dadurch**, dass die Bestimmung ein Ausführungsprofil des Programms liefert.

12. Verfahren nach Anspruch 1,
**dadurch gekennzeichnet, dass** die Berechnung von bestimmten der Funktionen, die mit den betrieblichen Merkmalen zusammenhängen, während der statistischen Programmanalysen durchgeführt werden, sobald bestimmte der Informationen extrahiert sind.

13. Anwendung des Verfahrens nach Anspruch 9 auf die automatische Filterung einer Gesamtheit von Programmen bezüglich einer Gesamtheit von Kriterien von gegebener Gültigkeit,
**dadurch gekennzeichnet, dass** die Extraktion von Informationen durch statistische Programmanalyse nur einmal pro Programm durchgeführt wird und jedes Mal, wenn notwendig, wieder verwendet wird, um zu bestimmen, ob das Programm die Gesamtheit von Gültigkeitskriterien beachtet.

14. System zur Distribution von Anwendungen, das sicherstellt, dass die Anwendungen Gültigkeitskriterien beachten, die den Ausführungsplattformen dieser Anwendungen beigefügt sind,
**dadurch gekennzeichnet, dass** es Filterungsmittel einschließt, die so angelegt sind, dass für jeden Klienten, der Zugang zu den Anwendungen für eine bestimmte Ausführungsplattform wünscht, die Anwendungen durch einen Verifizierungsvorgang gemäß dem Verfahren nach einem der Ansprüche 1 bis 11 gefiltert werden, wobei nur die Anwendungen dem Klienten präsentiert werden, die die Gültigkeitskriterien für die Plattform beachten.

15. System zur Ausführung von mehreren Anwendungen, das sicherstellt, dass die Anwendungen die gegebenen Gültigkeitskriterien beachten,
**dadurch gekennzeichnet, dass** es folgendes einschließt:
- eine Server für Analysen von Anwendungen, einen Server für Gültigkeit von Anwendungen und eine Mulitiapplikationsausführungsplattform, und
- Mittel, durch die sich vor dem Laden oder vor der Durchführung einer Anwendung auf die Plattform folgendes sicherstellen lässt:
o die Beachtung durch diese Anwendung der Kriterien gemäß dem Verfahren nach einem der Ansprüche 1 bis 11, wobei die Extraktion von Informationen auf dem Anwendungsanalysenserver erfolgt und die Validierung der Kriterien auf dem Anwendungsvalidierungsserver erfolgt, und
o in dem Fall, wobei eines der Kriterien nicht beachtet werden kann, das Versagen der Ladung oder der Ausführung der Anwendung, die Modifikation des Zustandes des Systems und die Emission eines Ton- oder Bildsignals, um vor dem Versagen der Ladung oder der Ausführung zu warnen.

16. System nach Anspruch 15,
**dadurch gekennzeichnet, dass** der Anwendungsvalidierungsserver auf der Multiapplikationsausführungsplattform läuft, der Anwendungsanalysenserver außerhalb der Plattform läuft.

17. System nach Anspruch 15,
**dadurch gekennzeichnet, dass** der Anwendungsanalysenserver und der Anwendungsvalidierungsserver auf der Multiapplikationsausführungsplattform laufen.
